**Europäisches Patentamt**

**European Patent Office**

**Office européen des brevets**

(11) Publication number : **0 390 564 B1**

## (12) EUROPEAN PATENT SPECIFICATION

(45) Date of publication of patent specification :
**26.10.94 Bulletin 94/43**

(21) Application number : **90303370.2**

(22) Date of filing : **29.03.90**

(51) Int. Cl.⁵ : **G11B 7/24,** G11B 7/26

�civerbi Nå A metal mold for resin substrate for an optical recording medium and recording medium obtained by it.

(30) Priority : **31.03.89 JP 78482/89**

(43) Date of publication of application :
**03.10.90 Bulletin 90/40**

(45) Publication of the grant of the patent :
**26.10.94 Bulletin 94/43**

(84) Designated Contracting States :
**FR GB**

(56) References cited :
**EP-A- 0 211 330**
**EP-A- 0 255 088**
**PATENT ABSTRACTS OF JAPAN vol. 009, no.
327 (P-415)(2050) 21 December 1985**

(73) Proprietor : **Hitachi Maxell Ltd.
No 1-1-88, Ushitora
Ibaraki-shi
Osaka-fu (JP)**

(72) Inventor : **Kinoshita, Shinitsu
2-2-504 Togashira-1-chome
Toride-shi (JP)**

(74) Representative : **Senior, Alan Murray et al
J.A. KEMP & CO.,
14 South Square,
Gray's Inn
London WC1R 5LX (GB)**

## Description

BACKGROUND OF THE INVENTION

The present invention relates to a resin substrate for optical recording medium and a metal mold for making the same by injection molding.

Conventionally, optical recording mediums such as compact discs the substrate of which is made of an injection-molded resin have been known.

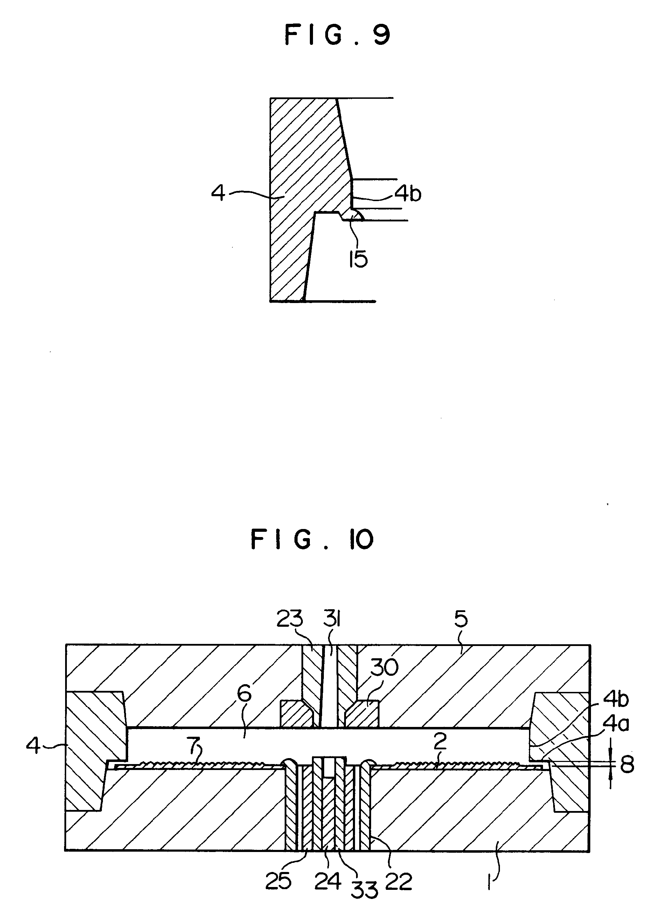

Figure 10 is a cross sectional view showing an example of metal molds used for injection molding such a resin substrate, wherein a disc-shaped cavity 6 comprises a stamper 2 reinforced by a backing plate 1, a ring-shaped stamper inner circumference presser 22, and a ring-shaped stamper outer circumference presser 4, and a mirror plate 5 detachably engaged with the open end of the stamper outer circumference presser 4, which serves as a metal mold for supporting the stamper.

The above stamper 2 is a thin plate-shaped metal mold on which a reverse pattern 7 of a spiral or concentric signal pattern to be transferred onto the resin substrate is formed and mounted on the backing plate 1 by the stamper inner circumference presser 22 and the stamper outer circumference presser 4.

The stamper inner circumference presser 22 firmly fixes the inner circumference of the stamper 2 to the above backing plate 1, whereas the stamper outer circumference presser 4 is arranged to provide a clearance of about 15 μm in maximum between a stamper abutting surface 4a and the surface of the stamper 2 so that the stamper 2 can be thermally expanded in radial directions freely and a signal pattern having highly true roundness can be transferred by exhausting a gas in the cavity 6 when it is filled with resin, and thus the stamper outer circumference presser 4 loosely supports the outer circumference of the stamper 2.

The cavity side surface of the stamper outer circumference presser 4, i.e., the surface 4b forming the outer circumferential surface of the resin substrate is substantially vertically formed with respect to the surface of the stamper 2 on which the reverse pattern is formed to make the outside appearance of the formed substrate good.

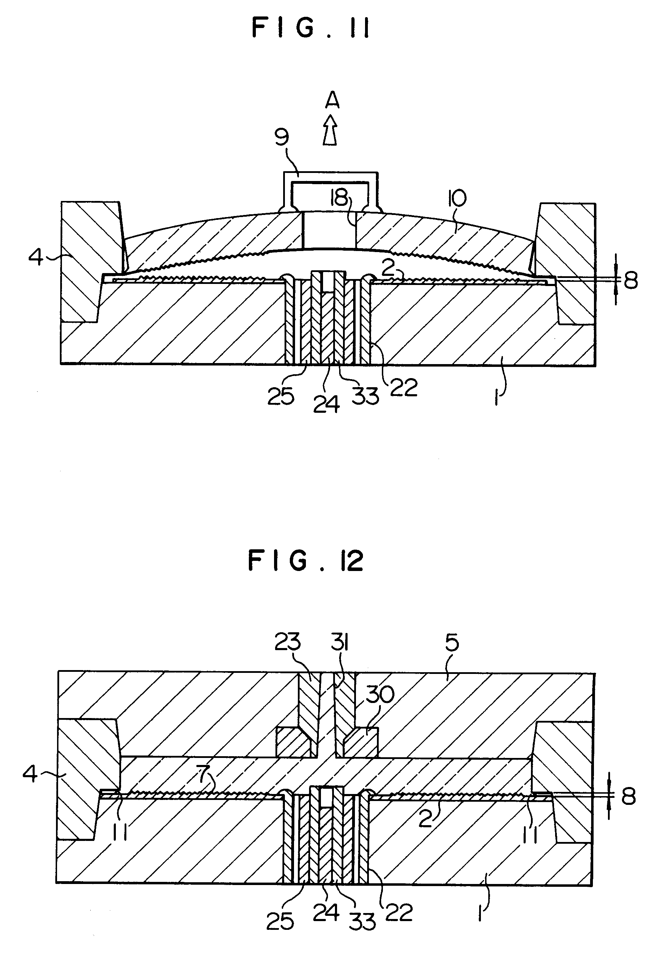

Further, as shown in Figure 11, the metal mold is provided with a robot 9 for taking out the substrate so that the injection-molded resin substrate 10 can be automatically taken out from the cavity 6. The substrate taking-out robot 9 is inserted into the stamper outer circumference presser 4, when injection molding has been completed and the mirror plate 5 the surface of which in contact with the resin to be moulded is polished like a mirror is opened, sucks substantially the centre of the resin substrate 10 and pulls it out to the open end side of the stamper outer circumference presser 4 (in the direction of an arrow A).

A known technology regarding the above is disclosed in JP-B-60-18527 which provides the basis for the prior art portion of claim 1.

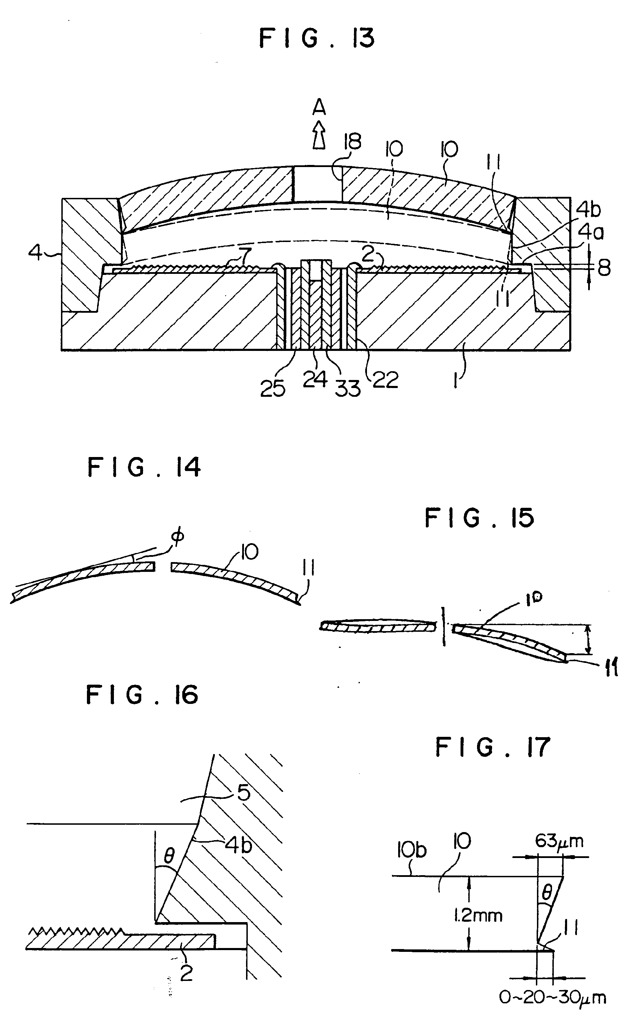

As described above, the metal mould used for the resin substrate for optical recording medium is provided with the clearance 8 between the stamper 2 and the stamper outer circumference presser 4, different from a usual metal mould, and thus when resin is injected into the cavity 6, melded resin enters the above clearance 8 by a pressure produced during the injection and burrs 11 are made around the circumference of the resin substrate 10, as shown in Figure 15. The burrs 11 are not uniformly made around the circumference of the resin substrate 10, but partially made or not made at all depending upon a dimension of the above clearance 8.

Therefore, a problem arises in that the resin substrate 10 has an inferior outside appearance and thus the commercial value is lowered as well as various functional problems arise in that the resin substrate 10 is liable to come into collision with a device such as, for example, a disc cartridge or an optical recording medium drive unit which makes a relative movement with respect to the optical recording medium, because an external dimension of the resin substrate 10 is made larger than a designed value.

Further, although the effect of the burrs 11 can be avoided in such a manner that when the injection-molded resin substrate 10 is taken out from the cavity 6, a combined member of the backing plate 1 and the stamper 2 is separated from the stamper outer circumference presser 4 and the resin substrate 10 is removed from the stamper 2, a disadvantage arises in this case in that the stamper 2 is deformed by a removing force of the resin substrate 10, because the outer circumference of the stamper 2 is made to a free end. Consequently, as shown in Figures 11 and 13, to take out the resin substrate 10, such a method cannot help being employed that the mirror plate 5 is separated from the stamper outer circumference presser 4 and the resin substrate 10 is drawn out upwardly along the stamper outer circumference presser 4.

To enable the resin substrate 10 to be taken out from the cavity 6 by this method, the resin substrate 10 must be curved to the angle at which the extreme end of the burrs 11 gets over the corner defined by the stamper abutting surface 4a of the stamper outer circumference presser 4 and the cavity side surface 4b, as shown in Figure 13. Moreover, in the conventional metal mold mentioned above, since the cavity side surface 4b of

2

the stamper outer circumference presser 4 is formed substantially vertically with respect to the reverse pattern forming surface of the stamper 2, a bending stress is continuously applied to the resin substrate 10 while the extreme end of the burrs 11 is held in abutment against the cavity side surface 4b of the stamper outer circumference presser 4. Various obstacles arise, when the resin substrate 10 is taken out from the stamper outer circumference presser 4 while such a bending stress is applied to the resin substrate 10. That is, a problem arises in that a flat shape of the resin substrate 10 is liable to be distorted and the resin substrate 10 is susceptible to be made to an optical anisotropic member. In particular, since the resin substrate 10 is needed to be taken out from the metal mold before it has been sufficiently cooled to increase productivity, such a problem is often caused.

When the resin substrate 10 is taken out from the metal mold at a temperature as higher as possible below the thermal deformation temperature thereof (accordingly, at a temperature near to the thermal deformation temperature), the characteristics of the resin substrate with respect to optical anisotropy such as the retardation (birefringence) of the resin substrate can be kept in a good state, whereas a drawback arises in that the resin substrate is deformed when it is taken out from the metal mold and it remains deformed, as shown in Figures 11 and 13. This residual deformation include such types as:

(i) a residual curvature as shown in Figures 14 and 15, which is often observed in a resin substrate in which the burrs shown in Figure 13 are uniformly formed around the entire circumference thereof with the substantially same length; and

(ii) an upward and downward waving curvature, which is made on the surface of a resin substrate, when above burrs 11 having varying lengths are formed around the entire circumference of the resin substrate. In particular, as the cycle of the waves is made shorter, an obstacle arises in that the sensitivity of an optical disc for recording and reproducing information is greatly lowered and a recording and reproducing error ratio is increased, when an optical disc is practically used. A degree of adverse effects applied to an optical disc product by the residual deformation of the resin substrate depends upon an angle $\phi$ showing a magnitude of the deformation shown in Figure 14, and, in general, the sensitivity for recording and reproducing information is deteriorated and the information recording and reproducing error ratio is increased in the range of $\phi > 5$ m radian.

Therefore, a temperature at which the injection-molded resin substrate is taken out from the metal mold is needed to be a temperature at which the above deformation does not remain. This temperature is different depending upon the kind of resin material and time necessary from supply of resin to the cavity of an injection moulding machine to taking out melted resin is also different depending upon the kind of resin, and thus a problem arises in that a manufacturing job is complex and manufacturing cost is increased.

Therefore, an object of the present invention is to provide a metal mould capable of injection-moulding a resin substrate used for the optical recording medium with that optical recording medium being excellent in outside appearance and having a highly accurate external dimension.

Further, to achieve the above object, a mould is provided as defined in claim 1 and in which a dimension of a metal mould projection ring formed on the stamper outer circumference side corner of the metal mould is made smaller than a dimension of the corner extreme end in contact with the stamper outer circumference presser of a cavity mould defined by a mirror plate and the stamper outer circumference presser by at least an amount corresponding to a projecting amount of the burrs made between both the members.

A moulding machine employing the metal mould of the invention can securely make burrs at the outer circumferential edge of a signal pattern side of a transparent resin substrate in the production of an improved optical recording.

Thus a recording medium can be produced which uses a transparent resin substrate in which an external dimension of the signal pattern surface of a substrate is made smaller than an external dimension of a light incident surface and the extreme end of burrs projecting from the outer circumferential edge of the above signal pattern surface is formed inwardly of the outer circumferential edge of the light incident surface.

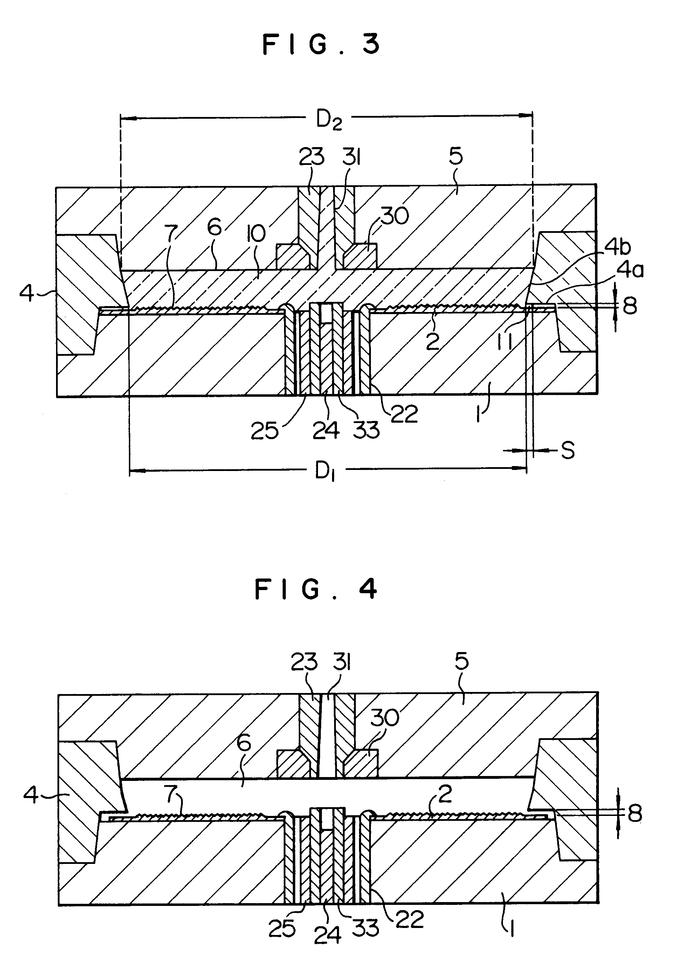

More specifically, according to an arrangement of the metal mould embodying the present invention shown in Figures 3 to 10, a clearance 8 having an optimum value is securely provided at the portion of a stamper presser 4 and a stamper 2, and a value of the clearance 8 is adjusted and set, because it changes depending upon the kind of a resin material used, a melting temperature of the resin material to be injected and supplied, a dimension and set value of burrs, a temperature of the stamper presser 4 and the like.

For example, when injection moulding is carried out in such a manner that polycarbonate resin is melted at a temperature from 280 and 360°C, injected into the stamper presser of 70 to 130°C, and a length of burrs is set to 20 to 30 μm or less, a value of the above clearance must be set to about 10 μm ± 4 μm.

The polycarbonate transparent substrate made by the above injection molding method is taken out from the metal mold at a substrate temperature preferably from 115 to 128°C and more preferably from 120 to 128°C, when it is taken into consideration that no residual deformation remains and optical anisotropy such as retardation is made as small as possible.

In many cases, the optical recording medium is observed from the plane direction thereof in view of the configuration and function thereof. Further, two optical recording mediums are often bonded together with the signal pattern surfaces thereof faced inwardly. Therefore, when the extreme end of the burrs projecting from the outer circumferential edge of the signal pattern surface is disposed inwardly of the outer circumferential edge of the light incident surface, the burrs are barely observed from the plane direction of the optical recording medium, whereby the outside appearance thereof is improved.

Further, since the burrs do not project to the outside of the light incident surface, an accuracy of an external dimension of the optical recording medium is greatly improved.

Further, when the configuration of the cavity side surface of the stamper outer circumference presser is formed such that the inside width thereof on the stamper side is made smaller and the inside width thereof on the mirror plate side is made larger, the curvature of the transparent substrate can be reduced or removed. This is because that when the formed resin substrate is taken out, it must be curved similar to a conventional substrate until the burrs get over the corner defined by the abutting surface of the stamper outer circumference presser and the cavity side surface, but thereafter the inside width of the cavity side surface is wider than the above corner. Thus, a bending stress applied to the resin substrate is lowered, whereby the deformation and retardation of the substrate is reduced.

As described below in detail, according to the present invention, an injection-molded substrate can be taken out from a metal mold with almost no bending stress applied thereto, and thus a resin substrate for optical recording medium excellent in optical characteristics can be formed. In addition, since burrs are arranged such that they do not project outwardly from a light incident surface, the outside appearance of an optical recording medium can be improved.

## BRIEF DESCRIPTION OF THE DRAWINGS

Figure 1 is a cross sectional view of a metal mold for a transparent substrate according to examples;

Figure 2 is a main part enlarged cross sectional view of a stamper inner circumference pressing ring used for the metal mold and the position of a movable cutter for cutting injection-molded resin;

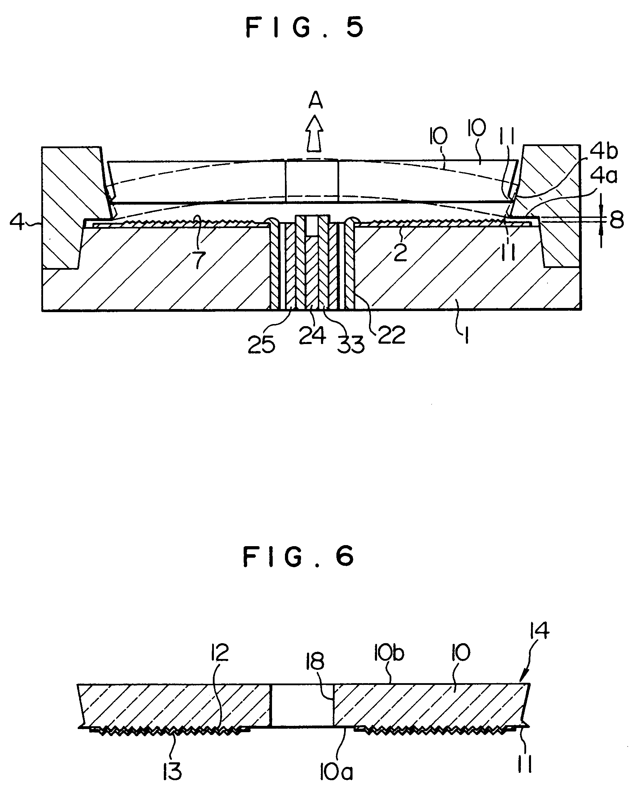

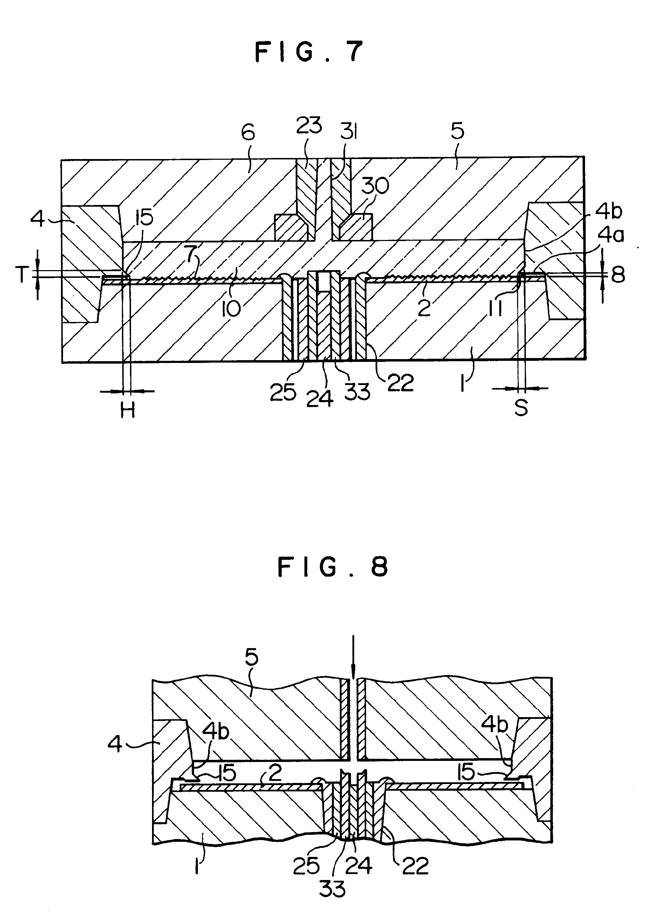

Figures 3 to 7 are diagrams of examples according to the present invention, wherein Figure 3 is a cross sectional view of a metal mold according to the first example, Figure 4 is a cross sectional view showing a modified example of the metal mold according to the first example, Figure 5 is a cross sectional view explaining the advantages of the metal mold according to the first example, Figure 6 is a cross sectional view of an optical recording medium using a substrate made by the metal mold of the first example, and Figure 7 is a cross sectional view of of a metal mold according to the second example according to the present invention;

Figure 8 is a cross sectional view of a metal mold for a transparent substrate according a modified embodiment of the example shown in Figure 7;

Figure 9 is an enlarged cross sectional view of a stamper outer circumference pressing ring used for the metal mold;

Figures 10 to 13 are diagrams explaining prior art, wherein Figure 10 is a cross sectional view of a conventionally known metal mold, Figure 11 is a cross sectional view showing a way by which a resin substrate is taken out, Figure 12 is a cross sectional view showing portions where burrs are made, and Figure 13 is a cross sectional view showing a problem of a conventional metal mold;

Figure 14 is a cross sectional view of a portion where a residual deformed curvature is made of a molded resin substrate taken out from the conventional metal mold;

Figure 15 is a cross sectional view of a possible modification of the curvature shown in Figure 14;

Figure 16 is a cross sectional view of a metal mold showing an inclining direction and angle of mirror-finished side wall of a stamper presser 4, which serves as a stamper supporting metal mold, for an injection molding metal mold;

Figure 17 is a cross sectional view showing a configuration of the side wall at the outer circumferential edge of a transparent resin substrate molded by the injection molding metal mold shown in Figure 16, a configuration of burrs, and an angle of the side wall;

Figure 18 is a cross sectional view of a write once type optical disc according to another example of the present invention;

Figure 19 is a cross sectional view of the magnetooptical type optical disc.

Figure 20 is an enlarged cross sectional view of the optical disc;

Figure 21 is an enlarged cross sectional view of the bonded portion of the optical discs;

Figure 22 is a cross sectional view of a metal mold of a modified example according to the second example of the present invention shown in Figure 7.

DETAILED DESCRIPTION OF PREFERRED EMBODIMENT

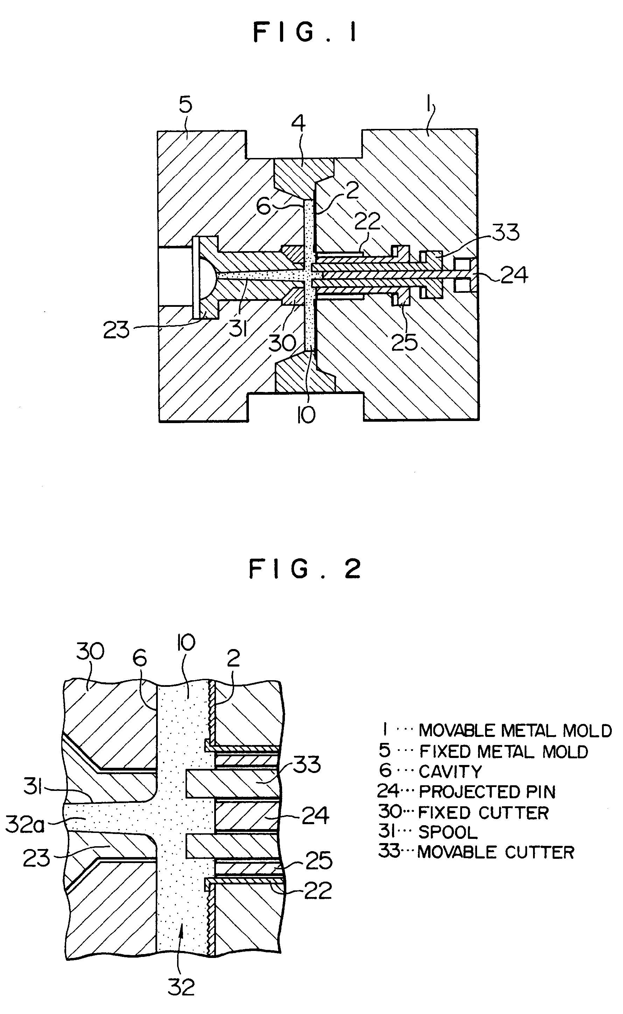

Figures 1 and 2 are cross sectional views showing a resin substrate for optical disc molding apparatus as a whole according to the present invention. An example of the metal mold comprises a fixed metal mold 5 and a movable metal mold 1, and a disc-shaped cavity 6 is formed at the joined face of the fixed metal mold and the movable metal mold. The cavity side surface of the above fixed metal mold 5 is mirror-finished so that it can form the mirror surface (light incident surface) of an optical disc substrate. On the other hand, a stamper 2, on which a reverse pattern of a signal pattern to be transferred onto the optical disc substrate is formed, is mounted on the inner surface of the movable metal mold 1 so that the signal surface of the optical disc substrate can be formed. The above fixed metal mold 5 has a spool 31 defined therethrough and communicating with the center of the above cavity 6, and a ring-shaped fixed cutter 30 is disposed around the outer circumference thereof. On the other hand, a cylindrical movable cutter 33 having an outside diameter capable of being inserted into the fixed cutter 30 is disposed at the portion confronting the above fixed cutter 30 of the movable metal mold 1 such that the movable cutter 33 goes in and out the fixed cutter 30.

As shown in Figure 1, the metal mold for molding optical disc substrate makes an optical disc substrate 10 in such a manner that melted resin 32 is filled in the cavity 6 through the spool 31 to form the substrate 10 of plate shape having a mirror surface and a signal surface, then, as shown in Figure 2, the movable cutter 33 is moved forwardly to enable the extreme end thereof to be inserted into the fixed cutter 30 thereby to cut the portion of the resin molded in the spool 31 and define a center hole 18.

As shown in Figure 6, this metal mold for molding optical disc substrate enables the center hole 18 to be mirror-finished. In Figure 1, 4 designates a cavity ring for regulating the outer circumferential configuration of the cavity, 22 designates a stamper outer circumference presser (stamper holder) for fixing the stamper to the fixed metal mold, 23 designates a spool bush through which the spool is defined, 24 designates a projected pin for bending off a thin wall portion, 25 designates an eject ring for removing the optical disc substrate from the movable metal mold, and 26 designates a take-out unit for taking out the injection-molded optical disc substrate.

The metal mold for molding the optical disc substrate in the figures is characterized in that the range in which the movable cutter 33 can be moved is restricted. More specifically, the moving range of the movable cutter 33 is adjusted such that when it is moved to the most advanced position thereof from the most retracted position thereof (refer to Figure 4), the extreme end of the movable cutter 33 is not inserted into the fixed cutter 30 and thus the thin wall portion 27 can be formed between a resin 8a filled in the spool 31 and a resin 8b filled in the cavity 6.

EXAMPLES

Example 1

Figure 3 shows the first example of the metal mold according to the present invention. As shown in Figure 3, the metal mold according to the present invention is essentially the same as the conventional one described above, and comprises a stamper 2 reinforced by a backing plate 1, a stamper inner circumference presser 3, a stamper outer circumference presser 4, a mirror plate 5, and a cavity 6.

The present invention is characterized in that the cavity side surface 4b of the above stamper outer circumference presser 4 is formed to an inclined shape such that it is narrower on the above stamper 2 side and made gradually wider toward the above mirror plate 5 and that a dimension $D_1$ of the portion defined by the stamper 2 of the cavity 6 and the stamper outer circumference presser 4 is made smaller than a dimension $D_2$ of the portion defined by the mirror plate 5 and the stamper outer circumference presser 4.

A dimensional difference $(D_2 - D_1)$ between the dimension $D_2$ of the mirror plate 5 side and the dimension $D_1$ of the stamper 2 side is set to a value at least larger than a projecting amount S of burrs 11 made between the stamper 2 and the stamper outer circumference presser 4.

As shown in Figure 16, the surface 4b of the stamper outer circumference presser 4 preferably has an inclining angle $\theta$ of 2 to 30° and more preferably has an inclining angle of 3 to 10°.

Further, the transparent resin substrate molded by an injection molding machine according to the present invention has an optimum dimension shown in Figure 17, in which a value of angle $\theta$ is the same as a value of angle $\theta$ shown in Figure 16.

Note that the concept of an inclined shape in the present invention includes a curve surface shown in Figure 4 in addition to a completely inclined surface shown in Figure 3.

5

The present example is arranged similar to the above conventional metal mold except the configuration of the cavity side surface of the stamper outer circumference presser 4.

When the metal mold for a resin substrate for optical recording medium according to the example is used, burrs similar to those made in the metal mold according to prior art are also made in a clearance 8 defined between the stamper 2 and the stamper outer circumference presser 4. Therefore, when a molded resin substrate 10 is taken out by a robot 9, the resin substrate 10 must be curved to the same degree as that conventionally needed, as shown by a dotted line in Figure 5, until the burrs 11 get over the corner defined by the stamper abutting surface 4a of the stamper outer circumference presser 4 and the cavity side surface 4b.

Since, however, the inner width of the cavity side surface 4b is gradually increased after the burrs 11 have got over the above corner, the curvature of the resin substrate 10 is reduced or removed as shown by a solid line in Figure 5, whereby a bending stress applied to the resin substrate 10 can be lowered. As a result, the deformation and retardation of the resin substrate 10 is reduced, whereby a resin substrate excellent in optical characteristics can be made.

The following table shows the flatness of the light incident surface of the resin substrate molded by the conventional metal mold and that of the resin substrate molded by the metal mold according to the above first example. In the test of the flatness, three specimens (1) to (3) having different resin injecting conditions and conditions for taking out the specimens from the metal molds were prepared and an inclination of the light incident surface of each specimen was measured. Numerals in the table show a dispersion of inclinations at a plurality of preset points on each specimen by a unit of milliradian, wherein "0" shows that the light incident surface is not inclined at all and symbols + and - show a direction of the inclination.

| Specimen | Conventional Metal Mold | Metal Mold of the Invention |
|---|---|---|
| (1) | - 1 ~ + 5 | + 2 ~ + 4 |
| (2) | - 8 ~ + 9.5 | 0 ~ + 2 |
| (3) | - 3 ~ + 7 | + 1 ~ + 3 |

As apparent from the above table, the specimens made by the metal mold according to the present invention had the inclinations and the dispersion thereof very smaller than those of the specimens made by the conventional metal mold, and thus it was found that the metal mold according to the present invention was effective to prevent the deformation of resin substrates.

As shown in Figure 6, according to the above metal mold of the first example, a resin substrate 10 for optical recording medium is made, which comprises one surface (signal pattern surface 10a) on which a desired signal pattern 12 is transferred and the outer circumferential edge thereof formed to an inclined shape, wherein burrs 11 project from the outer circumferential edge of the signal pattern surface 10a and the extreme end of the burrs 11 is disposed inwardly of the outer circumferential edge of a light incident surface 10b. Then, an optical recording medium 14 is made by forming a desired thin film layer 13 including at least a recording layer or a reflecting layer on the above signal pattern 12.

Since the optical recording medium in Figure 6 has the burrs 11 projecting from the outer circumferential edge of the signal pattern surface 10a the extreme end of which is disposed inwardly of the outer circumferential edge of the light incident surface 10b, the burrs 11 are barely observed from the plane direction of the optical recording medium 14, and thus the burrs 11 do not deteriorate the outside appearance of the optical recording medium 14. In particular, such an advantage is increased in a both side recording type optical recording medium composed of two optical recording mediums 14 bonded together with the thin film layers 13 thereof faced inwardly.

Further, since the burrs 11 do not project outwardly of the light incident surface 10b, the external dimensional accuracy of the optical recording medium 14 is greatly improved.

Example 2

Next, the second example of the metal mold according to the present invention will be described below with reference to Figures 7, 8, 9, and 22.

6

The metal mold of this example is such that the cavity side surface 4b of a stamper outer circumference presser 4 is formed substantially vertically with respect to a mirror plate 5 and the reverse pattern forming surface 1a of a stamper,and a projection 15 projecting into the cavity 6 is formed at a portion adjacent to the stamper abutting surface 4a of the cavity side surface 4b.

Although an projecting amount H of the above projection 15 can be arbitrarily designed, preferably it is larger than a projecting amount of S of burrs 11 made between the stamper 2 and the stamper outer circumference presser 4. Further, the above projection 15 preferably has a width T as small as possible and is formed to a shape as thinner as possible, taking the strength thereof and the like into consideration.

Since the metal mold according to this example has the cavity side surface 4b of the stamper outer circumference presser 4 formed substantially vertically, a resin substrate having a more excellent outside appearance can be made. Further, since the projection 15 is formed to have the narrow width, the curvature of the resin substrate 10 can be reduced or removed as soon as the burrs 11 get over the projection 15, and thus a resin substrate which is more excellent in optical characteristics can be made.

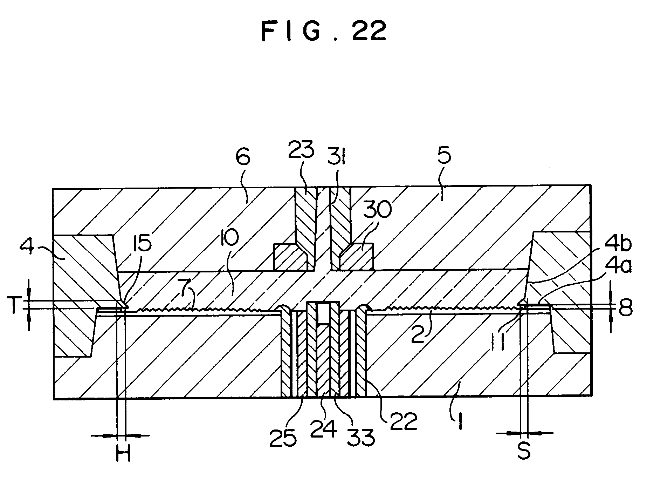

Figure 8 shows an example of a metal mold 4 a projection 15 of which has a round configuration and Figure 22 shows an example of a metal mold 4 a cavity side surface 4b of which is inclined.

Used as a material of a transparent substrate 11 are, for example, polycarbonate (PC), polymethyl methacrylate (PMMA), polymethyl penten, epoxy, etc.

As shown in Figures 8 and 9, the projection 15 projecting radially inwardly is disposed at the inner circumferential edge in contact with the stamper 2 at the outside diameter regulating surface 4b in the above stamper outer circumference presser 4. Therefore, as shown in Figure 19, a ring-shaped cutout 40 in accordance with the configuration of the projection 15 is formed at the outer circumferential edge of the transparent substrate 10 molded by this metal mold.

As shown in Figure 19, the first enhanced film 52, a recording film 13, the second enhanced film 42, a metal reflecting film 43, and a protective film 44 are sequentially formed and laminated on the transparent substrate 10 preformatted as described above by a predetermined film forming technique.

Used as the above first and second enhanced films 52 and 53, is, for example, a dielectric such as silicon nitride, aluminum nitride, etc.

Used as the recording film 13 composed of an optical-magnetic recording material is mainly amorphous alloy such as, for example, Tb-Fe alloy, Tb-Fe-Co alloy, Tb-Fe-Co-Nb alloy, Tb-Fe-Nb alloy, Gd-Tb-Fe-Nb alloy, Gd-Tb-Fe-Co-Nb alloy, Gd-Tb-Fe alloy, Dy-Fe alloy, Mn-Cu-Bi alloy (crystalline substance), Gd-Tb-Fe-Ge alloy, Ge-Co alloy, Gd-Tb-Co alloy, Gd-Tb-Co-Nb alloy, a mixture of Tb-Fe alloy and Gd-Fe alloy, a mixture of Tb-Fe alloy and Gd-Fe-Co alloy, Tb-Dy-Fe-Co alloy, Tb-Ni-Fe alloy, Dy-Fe-Gd-Co alloy, etc.

Used as a recording material of a write once type optical data recording medium are, for example, Te, Te-Se-Pb alloy, Te-C alloy, Te-TeO-TeO$_2$ alloy or organic pigment having a recording ability, etc.

Used as the above metal reflecting film 43 are, for example, Al, Al-Ni alloy, Al-Ti alloy, Al-Cr alloy, Al-Mn alloy, Al-Ni-Ti alloy, etc.

Used as the above protective film 44 are, for example, an organic material such as UV curing resin, epoxy resin, etc, an inorganic material such as aluminum oxide, silicon oxide, etc.

The thus arranged two optical discs 14 are integrally bonded together with the recording films 13 thereof faced inwardly through an adhesive 46 such as UV curing resin, epoxy resin, etc. At the time, as shown in Figure 21, the cutout 40 formed on the transparent substrate 10 serves as an adhesive stopper and thus the excessive adhesive 46 does not overflow to the outer circumference of the transparent substrate 10.

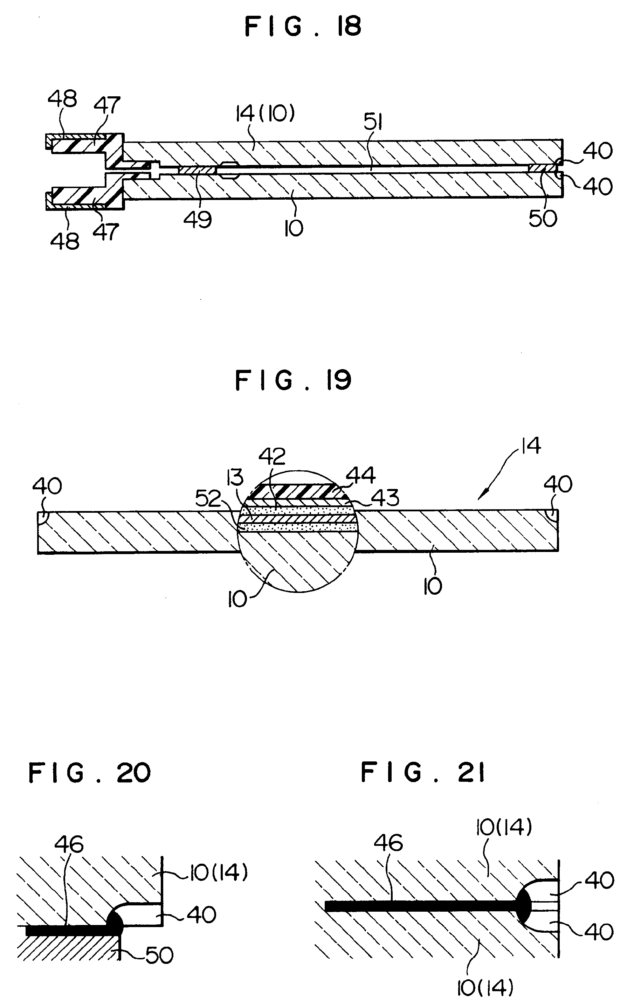

Figures 18 and 20 are diagrams explaining another example of the present invention.

In Figures 18 and 20, 47 designates a center hub, 48 designates a magnetic plate fixed to the center hub 47, 49 designates an inner circumference spacer, 50 designates an outer circumference spacer, and 51 designates a void formed by the above spacers 49 and 50.

In the case of this example, two preformatted optical discs 14 are integrally bonded together with the recording films thereof faced inwardly through the inner and outer circumference spacers 49 and 50. At the time, as shown in Figure 10, a cutout 40 formed on a transparent substrate 10 serves as an adhesive stopper and thus an excessive adhesive 46 does not overflow to the outer circumference of the transparent substrate 10.

## Claims

1. A metal mould for the moulding of a resin substrate (10) for an optical recording medium, such mould comprising a stamper (2) on which a reverse pattern (7) of a signal pattern to be transferred onto the resin substrate (10) is formed, a backing plate (1) for reinforcing the stamper (2), a stamper inner circumference presser (22) for fixing the inner circumference of the stamper (2) to the backing plate (1), a stamper outer circumference presser (4) for loosely pressing the outer circumference of the stamper (2), and a mirror plate (5) to be engaged with the open end of the stamper outer circumference presser (4), characterised in that in a cavity formed of said parts, the dimension ($D_1$) of the portion defined by said stamper (2) and said stamper outer circumference presser (4) is made smaller than the dimension ($D_2$) of the portion defined by said mirror plate (5) and said stamper outer circumference presser (4) by at least an amount (3) corresponding to the projecting amount of burrs (11) made between said stamper (2) and said stamper outer circumference presser (4).

2. A metal mould according to claim 1, wherein the cavity side surface (4b) of said stamper outer circumference presser (4) is formed as an inclining surface such that said cavity side surface (4b) is made narrower on the said stamper (2) side and gradually wider toward said mirror plate (5).

3. A metal mould according to claim 1, wherein said cavity side surface (4b) of said stamper outer circumference presser (4) is formed substantially vertically with respect to said mirror plate (5) and the reverse pattern forming surface (7) of said stamper (2), and a projection (18) projecting into said cavity is formed on said cavity side surface (40) at a position adjacent to the stamper abutting surface.

4. An optical recording medium obtained by a mould as claimed in any preceding claim and which comprises a thin film layer including at least a recording layer or a reflecting layer formed on a signal pattern transferred to one surface of a resin substrate (10), and wherein an external dimension ($D_1$) of said signal pattern surface of said resin substrate (10) is made smaller than an external dimension ($D_2$) of a light incident surface and the extreme end of burrs (11) projecting from the outer circumferential edge of said signal pattern surface is disposed inwardly of the outer circumferential edge of said light incident surface.

**Patentansprüche**

1. Metallform zum Bilden eines Harzsubstrats für ein optisches Aufnahmemedium, mit einem Stempel (2) auf dem ein Negativmuster (7) eines auf das Harzsubstrat (10) zu übertragenden Signalmusters gebildet ist, einer Halteplatte (1) zum Verstärken des Stempels (2), ein Innenumfangspreßteil (22) des Stempels (2), zum Festlegen des inneren Umfangs des Stempels (2) an die Halteplatte (1), ein Außenumfangspreßteil (4) des Stempels (2) zum losen Pressen des äußeren Umfangs des Stempels (2), und einer Spiegelplatte (5), die mit dem offenen Ende des Innenumfangspreßteils (4) des Stempels (2) in Eingriff gebracht werden kann,
dadurch gekennzeichnet, daß
in einem aus diesen Teilen gebildeten Hohlraum die Abmessung ($D_1$) des durch den Stempel (2) gebildeten Abschnitts und das Innenumfangspreßteil (4) des Stempels (2) kleiner ist als die Abmessung ($D_2$) des durch die Spiegelplatte (5) gebildeten Abschnitts und als das Außenumfangspreßteil (4) des Stempels (2), um zumindest einen Betrag (3) entsprechend dem Vorstehungsbetrag von Graten (11), die zwischen dem Stempel (2) und dem Außenumfangspreßteil (4) des Stempels (2) gebildet sind.

2. Metallform nach Anspruch 1, in der die Hohlraumseitenfläche (4b) des Außenumfangspreßteils (4) des Stempels (2) als eine geneigte Fläche gebildet ist, derart, daß die Hohlraumseitenfläche (4b) schmäler an der Seite des Stempels (2) und allmählich weiter in Richtung auf die Spiegelplatte (5) ausgebildet ist.

3. Metallform nach Anspruch 1, in der die Hohlraumseitenfläche (4b) des Außenumfangspreßteils des Stempels (2) im wesentlichen vertikal bezüglich der Spiegelplatte (5) und der das Negativmuster (7) des Stempels (2) bildenden Oberfläche gebildet ist und in der eine in den Hohlraum vorstehende Vorstehung (18) auf der Hohlraumseitenfläche (40) nahe der Stempelanschlagfläche ausgebildet ist.

4. Optisches Aufnahmemedium, aufgenommen durch eine Form nach einem vorangehenden Anspruch, mit einer Dünnfilmschicht, die zumindest eine Aufnahmeschicht oder eine Reflexionsschicht enthält, die auf einem Signalmuster ausgebildet ist, das auf eine Oberfläche eines Harzsubstrats (10) übertragen ist, und in dem eine äußere Abmessung ($D_1$) der Signalmusteroberfläche des Harzsubstrats (10) kleiner ausgebildet ist, als eine äußere Abmessung ($D_2$) einer Lichteinfallfläche, wobei das äußere Ende von Graten (11), die von der äußeren Umfangskante der Signalmusterfläche vorstehen, innenliegend zu der äußeren Umfangskante der Lichteinfallfläche angeordnet ist.

## Revendications

1. Moule métallique pour mouler un substrat (10) en résine destiné à un support d'enregistrement optique, ce moule comprenant un matrice de pressage (2) sur laquelle est formé un négatif (7) d'un dessin représentant un signal devant être transféré sur le substrat (10) en résine, une contre-plaque (1) pour renforcer le matrice de pressage (2), un organe (22) de pression de circonférence intérieure de matrice de pressage pour fixer la circonférence intérieure de la matrice de pressage (2) à la contre-plaque (1), un organe (4) de pression de circonférence extérieure de matrice de pressage pour presser de façon lâche la circonférence extérieure de la matrice de pressage (2), et une plaque polie (5) devant venir en contact avec l'extrémité ouverte de l'organe (4) de pression de circonférence extérieure de matrice de pressage, caractérisé en ce que dans une cavité formée desdites pièces, la dimension ($D_1$) de la portion définie par ladite matrice de pressage (2) et ledit organe (4) de pression de circonférence extérieure de matrice de pressage est plus petite que la dimension ($D_2$) de la portion définie par ladite plaque polie (5) et ledit organe (4) de pression de circonférence extérieure de matrice de pressage d'au moins une quantité (3) correspondant à la quantité de bavures (11) en saillie formée entre ladite matrice de pressage (2) et ledit organe (4) de pression de circonférence extérieure de matrice de pressage.

2. Moule métallique selon la revendication 1, dans lequel la surface latérale (4b) de la cavité dudit organe (4) de pression de circonférence extérieure de la matrice de pressage se présente sous la forme d'une surface inclinée de telle sorte que ladite surface latérale (4b) de la cavité est plus étroite sur ledit côté de la matrice de pressage (2) et est progressivement plus large vers ladite plaque polie (5).

3. Moule métallique selon la revendication 1, dans lequel ladite surface latérale (4b) de cavité dudit organe (4) de pression de circonférence extérieure de matrice de pressage est formée de façon sensiblement verticale par rapport à ladite plaque polie (5) et à la surface (7) qui forme un dessin inverse et que comporte ladite matrice de pressage (2), et une protubérance (18) faisant saillie jusque dans ladite cavité est formée sur ladite surface latérale (40) de la cavité, à un endroit adjacent à la surface en butée de la matrice de pressage.

4. Support d'enregistrement optique obtenu à l'aide du moule selon l'une quelconque des revendications précédentes et qui comprend un mince couche formant film et comprenant au moins une couche d'enregistrement ou une couche réfléchissante formée sur un dessin qui représente un signal et qui est transféré sur une des surfaces d'un substrat (10) en résine, et dans lequel une dimension extérieure ($D_1$) de ladite surface de dessin du substrat (10) sur laquelle a été transféré le dessin représentant un signal est plus petite qu'une dimension extérieure ($D_2$) d'une surface réceptrice de lumière, et l'extrémité des bavures (11) faisant saillie du bord circonférenciel extérieur de ladite surface portant le dessin représentant un signal est disposée vers l'intérieur par rapport à un bord circonférenciel de ladite surface réceptrice de lumière.

# F I G . 1

# F I G . 2

1 ⋯ MOVABLE METAL MOLD
5 ⋯ FIXED METAL MOLD
6 ⋯ CAVITY
24⋯ PROJECTED PIN
30⋯ FIXED CUTTER
31⋯ SPOOL
33⋯ MOVABLE CUTTER

# F I G . 3

# F I G . 4

# F I G . 5

# F I G . 6

# FIG. 7

# FIG. 8

# F I G . 9

# F I G . 10

FIG. 11

FIG. 12

# FIG. 13

# FIG. 14

# FIG. 15

# FIG. 16

# FIG. 17

16

# FIG. 18

# FIG. 19

# FIG. 20

# FIG. 21

# FIG.22